(19) Europäisches Patentamt / European Patent Office / Office européen des brevets

(11) EP 4 745 174 A1

(12) **EUROPEAN PATENT APPLICATION**
published in accordance with Art. 153(4) EPC

(43) Date of publication:
**20.05.2026 Bulletin 2026/21**

(21) Application number: **24839772.1**

(22) Date of filing: **09.07.2024**

(51) International Patent Classification (IPC):
***C08G 18/38*** *(2006.01)* ***C08G 75/06*** *(2006.01)*
***G02B 1/04*** *(2006.01)* ***G02C 7/00*** *(2006.01)*

(52) Cooperative Patent Classification (CPC):
**C08G 18/38; C08G 75/06; G02B 1/04; G02C 7/00**

(86) International application number:
**PCT/JP2024/024855**

(87) International publication number:
**WO 2025/013882 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 JP 2023113709**

(71) Applicant: **Mitsui Chemicals, Inc.**
**Tokyo 104-0028 (JP)**

(72) Inventors:
- **NAKANO, Shotaro**
  **Omuta-shi, Fukuoka 836-8610 (JP)**
- **NAKAI, Shinnosuke**
  **Omuta-shi, Fukuoka 836-8610 (JP)**

(74) Representative: **Mewburn Ellis LLP**
**Aurora Building**
**Counterslip**
**Bristol BS1 6BX (GB)**

(54) **POLYMERIZABLE COMPOSITION, CURED OBJECT, OPTICAL MATERIAL, SPECTACLE LENS, COMPOUND, METHOD FOR PRODUCING POLYMERIZABLE COMPOSITION, AND RESIN**

(57) The polymerizable composition includes: at least one selected from a polyiso(thio)cyanate compound or a polyepisulfide compound; a polythiol compound; and a reaction product of a compound represented by the following general formula (1) with a polythiol compound. In the general formula (1), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.

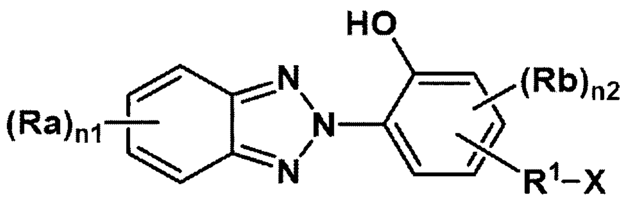

(1)



Processed by Luminess, 75001 PARIS (FR)

## Description

[Technical Field]

The present invention relates to a polymerizable composition, a cured product, an optical material, a spectacle lens, a compound, a method for producing polymerizable composition, and a resin.

[Background Art]

High-refractive-index plastic materials are increasingly being used as optical materials, such as spectacle lenses, for the reasons that they are lighter and less prone to breakage than inorganic materials such as glass, and that they are dyeable. Examples of plastic materials for optical applications include acrylic resins, polycarbonate, thiourethane resins, and episulfide resins. Among these, thiourethane resins and episulfide resins are known as plastic materials capable of achieving a high degree of refractive index (see, for example, Japanese Patent Application Laid-Open No. 2019-15922).

[Summary of the Invention]

[Problem to be Solved by the Invention]

Optical materials including a resin generally include an ultraviolet absorber (UVA) in order to prevent degradation caused by ultraviolet radiation. Since ultraviolet absorbers may leach out of resins depending on the conditions of use, and many compounds commonly used as ultraviolet absorbers are poorly biodegradable and raise concerns regarding, for example, accumulation in living organisms, they have recently become subject to environmental regulations. Accordingly, approaches for suppressing the release of ultraviolet absorbers from resins are being investigated.

In view of the foregoing, an embodiment of the present disclosure aims to provide a polymerizable composition that yields a resin with suppressed release of ultraviolet absorbers, and a production method thereof; and a cured product, an optical material and a spectacle lens that are obtained from the polymerizable composition.

A further embodiment of the present disclosure aims to provide a compound that yields a resin with suppressed release of ultraviolet absorbers, and a resin with suppressed release of ultraviolet absorbers.

[Means for Solving the Problem]

The means for solving the foregoing problem includes the following embodiments.

<1> A polymerizable composition, comprising:

at least one selected from a polyiso(thio)cyanate compound or a polyepisulfide compound;
a polythiol compound; and
a reaction product of a compound represented by the following general formula (1) with a polythiol compound:

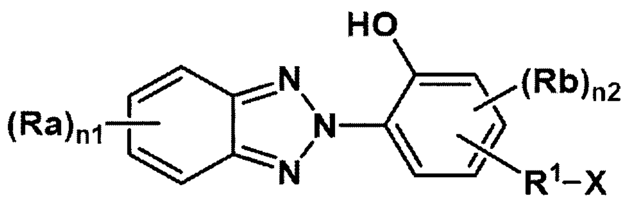

(1)

wherein, in the general formula (1), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.

<2> The polymerizable composition according to <1>, wherein the polyiso(thio)cyanate compound includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

<3> The polymerizable composition according to <1> or <2>, wherein the polythiol compound includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.
<4> A cured product of the polymerizable composition according to <1>.
<5> An optical material, including the cured product according to <4>.
<6> A spectacle lens, comprising the optical material according to <5>.
<7> A compound, including a reaction product of a compound represented by the following general formula (1) and a polythiol compound:

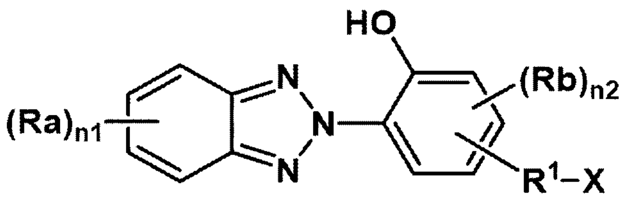

(1)

wherein, in the general formula (1), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.
<8> A compound having a structure represented by the following general formula (2) and a thiol group:

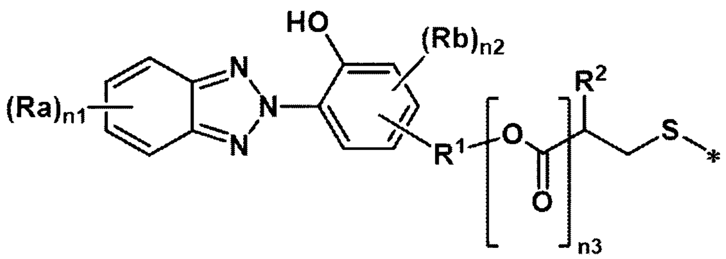

(2)

wherein, in the general formula (2), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; $R^2$ represents a hydrogen atom or a monovalent hydrocarbon group; n3 is 0 or 1; and * represents a bonding position.
<9> A method for producing a polymerizable composition, the method including:

preparing a mixture that includes the compound according to <7> or <8> and a polythiol compound; and mixing the mixture with at least one selected from a polyiso(thio)cyanate compound or a polyepisulfide compound.

<10> A resin having a structure represented by the following general formula (2):

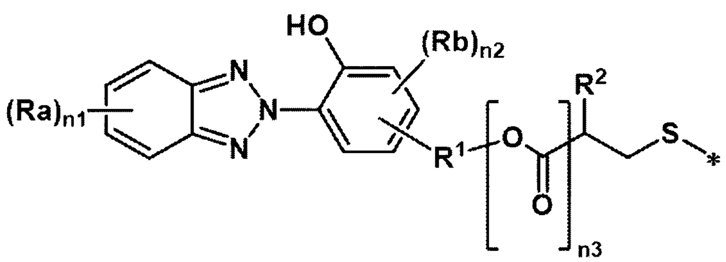

(2)

wherein, in the general formula (2), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; $R^2$ represents a hydrogen atom or a monovalent hydrocarbon group; n3 is 0 or 1; and * represents a bonding position.

[Effect of the Invention]

According to the present disclosure, a polymerizable composition that yields a resin with suppressed release of ultraviolet absorbers, and a production method thereof; and a cured product, an optical material and a spectacle lens that are obtained from the polymerizable composition are provided. According to the present disclosure, a compound that yields a resin with suppressed release of ultraviolet absorbers, and a resin with suppressed release of ultraviolet absorbers are provided.

[Embodiments for Implementing the Invention]

In the present disclosure, a numerical range expressed using "to" means a range that includes both the lower limit value and the upper limit value described before and after "to".

In the present disclosure, when multiple substances corresponding to a component are present in a composition, the amount of the component in the composition refers to the total amount of all substances corresponding to the component that are present in the composition, unless otherwise specified.

In the stepwise numerical ranges described in the present disclosure, an upper limit value or a lower limit value described for one numerical range may be replaced with the upper limit value or lower limit value of another stepwise numerical range. Further, in the numerical ranges described in the present disclosure, the upper limit value or the lower limit value of the numerical range may be replaced with a value shown in the examples.

[Polymerizable Composition]

An embodiment of the present disclosure is a composition that includes:

at least one selected from a polyiso(thio)cyanate compound or a polyepisulfide compound;
a polythiol compound; and
a reaction product of a compound represented by the following general formula (1) with a polythiol compound.

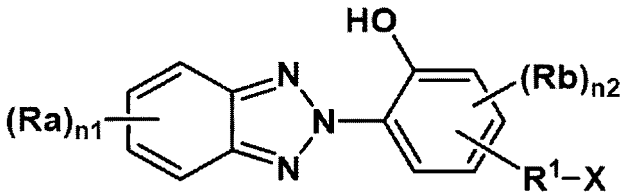

(1)

In the general formula (1), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.

The polymerizable composition of the present disclosure includes, as polymerizable components, at least one selected from a polyiso(thio)cyanate compound and a polyepisulfide compound (hereinafter also referred to as the "first component") and a polythiol compound (hereinafter also referred to as the "second component").

A resin containing a thiourethane structure can be obtained by reacting an iso(thio)cyanate group, which is a polymerizable functional group of the polyiso(thio)cyanate compound, with a thiol group, which is a polymerizable functional group of the polythiol compound.

A resin containing a sulfide structure can be obtained by reacting an episulfide group, which is a polymerizable functional group of the polyepisulfide compound, with a thiol group, which is a polymerizable functional group of the polythiol compound.

The resin obtained by the polymerization reaction between the first component and the second component (thiourethane resin or episulfide resin) has a high degree of refractive index, and is therefore suitably used for applications in which a high degree of refractive index is required, such as optical materials.

(Reactive UVA)

The polymerizable composition of the present disclosure includes, in addition to the first component and the second component, a reaction product of the compound represented by the general formula (1) and a polythiol compound (hereinafter also referred to as "reactive UVA").

The reaction product of the compound represented by the general formula (1) and a polythiol compound is formed by the reaction of the functional group represented by X in the general formula (1) with any one of plural thiol groups in the polythiol compound. Accordingly, the reaction product has a thiol group that has not reacted with the functional group represented by X in the general formula (1).

That is, the reactive UVA has the property of reacting with the first component included in the polymerizable composition.

Accordingly, in the resin obtained from the polymerizable composition containing the reactive UVA, the molecule functioning as the UVA is bonded to the polymer structure formed by the polymerization reaction of the polymerizable components. As a result, the release of the molecule functioning as the UVA from the resin is suppressed.

The specific molecular structure of the compound represented by the general formula (1) is not particularly limited, as long as it exhibits properties as UVAs.

In the general formula (1), Ra is a monovalent hydrocarbon group or a halogen atom. Examples of the monovalent hydrocarbon group represented by Ra include alkyl groups having 1 to 3 carbon atoms. Examples of the halogen atom represented by Ra include fluorine, chlorine, bromine, and iodine atoms. From the viewpoint of ultraviolet absorption performance, Ra is preferably a halogen atom, and more preferably a chlorine atom or a bromine atom.

n1 represents the number of Ra, and is a number from 0 to 4. n1 is preferably from 0 to 2, and more preferably 0 or 1.

When the number of Ra is 2 or more, the two or more of Ra may be the same or different from each other.

In the general formula (1), Rb is a monovalent group that does not contain an ethylenically unsaturated double bond.

Examples of the monovalent group that does not contain an ethylenically unsaturated double bond represented by Rb include monovalent hydrocarbon groups, alkoxy groups, and monovalent groups containing an ester bond.

Examples of the monovalent hydrocarbon group represented by Rb include alkyl groups having 1 to 10 carbon atoms. The alkyl group may be linear or branched, and may have a substituent. Examples of the substituent include a phenyl group.

Examples of the alkoxy group represented by Rb include alkoxy groups composed of an alkyl group having 1 to 10 carbon atoms and an oxygen atom. The alkyl group may be linear or branched, and may have a substituent. Examples of the substituent include a phenyl group.

Examples of the monovalent group containing an ester bond represented by Rb include monovalent groups represented by -Rc-C(=O)ORd or -Rc-OC(=O)-Rd (preferably -Rc-C(=O)ORd). In these formulas, Rc is an alkylene group having 1 to 10 carbon atoms, and Rd is an alkyl group having 1 to 10 carbon atoms. The alkylene group or the alkyl group may be linear or branched, and may have a substituent. Examples of the substituent include a phenyl group.

From the viewpoint of solubility in the polymerizable composition, Rb is preferably a monovalent hydrocarbon group, and more preferably an Sp3 hydrocarbon group (for example, a tert-butyl group).

From the viewpoint of ultraviolet absorption performance, Rb is preferably an alkoxy group having three or more carbon atoms.

n2 represents the number of Rb, and is a number from 0 to 3. n2 is preferably 0 to 2, and more preferably 0 or 1.

When the number of Rb is 2 or more, the two or more of Rb may be the same or different from each other.

In the general formula (1), $R^1$ is a divalent hydrocarbon group. Examples of the divalent hydrocarbon group represented by $R^1$ include alkylene groups or arylalkylene groups having 1 to 10 carbon atoms. The alkylene group may be linear or branched, and may include a cyclic structure.

The position of $R^1$ on the aromatic ring may be any of para, meta, or ortho position relative to the OH group.

In the general formula (1), X is a functional group that contains an ethylenically unsaturated double bond.

The functional group containing an ethylenically unsaturated double bond represented by X is not particularly limited as long as it is a functional group capable of reacting with a thiol group. Specific examples of X include a vinyl group, an acryloyloxy group and a methacryloyloxy group.

The type of the polythiol compound to be reacted with the compound represented by the general formula (1) is not particularly limited. For example, the polythiol compound may be selected from the polythiol compounds described later.

Examples of the reaction product of the compound represented by the general formula (1) and a polythiol compound include a compound having a structure represented by the following general formula (2) and a thiol group.

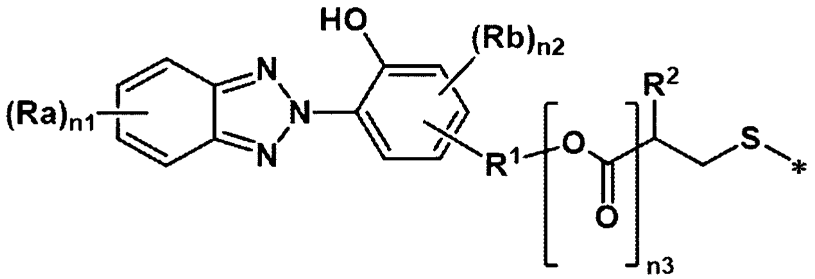

(2)

In the general formula (2), the definitions of Ra, n1, Rb, n2, and $R^1$ are the same as those of Ra, n1, Rb, n2, and $R^1$ in the general formula (1). $R^2$ represents a hydrogen atom or a monovalent hydrocarbon group, n3 is 0 or 1, and * indicates the bonding position.

$R^2$ is preferably a hydrogen atom, a methyl group, or an ethyl group, and more preferably a hydrogen atom or a methyl group.

The reactive UVA included in the polymerizable composition may be a single species or two or more species.

That is, the polythiol compound to be reacted with the compound represented by the general formula (1) may be a single species or two or more species, and the compound represented by the general formula (1) to be reacted with the polythiol compound may be a single species or two or more species.

The polythiol compound to be reacted with the compound represented by the general formula (1) may be the same as, or different from, the polythiol that is included as the polymerizable component in the polymerizable composition.

The amount of the compound represented by the general formula (1) included in the polymerizable composition is not particularly limited, and may be selected depending on the intended use of the polymerizable composition.

From the viewpoint of obtaining sufficient ultraviolet absorption performance, the amount of the compound represented by the general formula (1) is preferably 0.1 parts by mass or more, more preferably 0.2 parts by mass or more, still more preferably 0.5 parts by mass or more, and particularly preferably 1.0 part by mass or more, with respect to 100 parts by mass of the total polymerizable components.

From the viewpoint of the color tone of the resin, the amount of the compound represented by the general formula (1) is preferably 5.0 parts by mass or less, more preferably 3.0 parts by mass or less, and still more preferably 2.0 parts by mass or less, with respect to 100 parts by mass of the total polymerizable components.

The "amount of the compound represented by the general formula (1)" described above does not include the amount of the polythiol compound that has reacted with the compound represented by the general formula (1).

(Polyiso(thio)cyanate Compound)

In the present disclosure, the term "polyiso(thio)cyanate compound" refers to a compound having two or more isocyanate groups or isothiocyanate groups in one molecule.

The polyiso(thio)cyanate compound included in the polymerizable composition may be a single kind or two or more kinds.

The polyiso(thio)cyanate compound may include a dimer, a trimer, or a prepolymer. Examples of such polyiso(thio)cyanate compounds include those disclosed in International Publication WO 2011/055540.

Examples of the polyiso(thio)cyanate compound include aliphatic polyiso(thio)cyanate compounds, alicyclic polyiso(thio)cyanate compounds, aromatic polyiso(thio)cyanate compounds, and heterocyclic polyiso(thio)cyanate compounds.

The polyiso(thio)cyanate compound included in the composition may be a single compound or a combination of two or more compounds.

The alicyclic polyiso(thio)cyanate compound refers to a polyiso(thio)cyanate compound that includes an alicyclic structure and may further include a heterocyclic structure. The aromatic polyiso(thio)cyanate compound refers to a polyiso(thio)cyanate compound that includes an aromatic structure and may further include an alicyclic structure and a heterocyclic structure. The heterocyclic polyiso(thio)cyanate compound refers to a polyiso(thio)cyanate compound that includes a heterocyclic structure and does not include an alicyclic structure or an aromatic structure.

It is preferable that the polyiso(thio)cyanate compound include at least one selected from the group consisting of aliphatic polyiso(thio)cyanate compounds, alicyclic polyiso(thio)cyanate compounds, aromatic polyiso(thio)cyanate compounds, and heterocyclic polyiso(thio)cyanate compounds.

The polyiso(thio)cyanate compound preferably includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo[2.2.1]heptane, 2,6-bis(isocyanatomethyl)bicyclo[2.2.1]heptane, tolylene diisocyanate, 4,4'-diphenylmethane diisocyanate, and phenylene

diisocyanate;

more preferably at least one selected from the group consisting of 2,5-bis(isocyanatomethyl)bicyclo[2.2.1]heptane, 2,6-bis(isocyanatomethyl)bicyclo[2.2.1]heptane, xylylene diisocyanate, and 1,3-bis(isocyanatomethyl)cyclohexane; and
further preferably at least one selected from the group consisting of 2,5-bis(isocyanatomethyl)bicyclo[2.2.1]heptane, 2,6-bis(isocyanatomethyl)bicyclo[2.2.1]heptane, and m-xylylene diisocyanate.

(Polyepisulfide Compound)

In the present disclosure, the term "polyepisulfide compound" refers to a compound having two or more episulfide groups in one molecule.
The polyepisulfide compound included in the polymerizable composition may be a single compound or two or more compounds.
Specific examples of the polyepisulfide compound include compounds represented by the following formula.

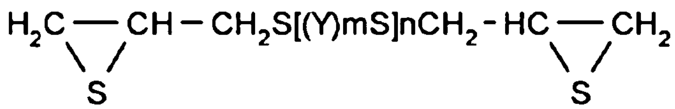

In the formula, Y represents a linear divalent hydrocarbon group having a carbon number of 1 to 4, a branched divalent hydrocarbon group having a carbon number of 2 to 4, a cyclic divalent hydrocarbon group having a carbon number of 3 to 6, a 1,4-dithiane group, an arylene group, or an aralkylene group; m represents a number from 0 to 2; and n represents a number from 0 to 3.
Y may be substituted or unsubstituted.
Y is preferably a linear divalent hydrocarbon group having a carbon number of 1 to 4, a branched divalent hydrocarbon group having a carbon number of 2 to 4, or a cyclic divalent hydrocarbon group having a carbon number of 3 to 6, and more preferably a linear divalent hydrocarbon group having a carbon number of 1 to 4.
m is preferably 0 or 1, and more preferably 0.
n is preferably 0 or 1, and more preferably 1.
As the polyepisulfide compound, it is preferable to include at least one selected from the group consisting of bis(2,3-epithiopropyl) sulfide, bis(2,3-epithiopropyl) disulfide, and 2,5-bis(2,3-epithiopropylthiomethyl)-1,4-dithiane.
From the viewpoint of the refractive index of the resulting cured product, the polyepisulfide compound preferably has a refractive index at 20°C with respect to the sodium D-line (i.e., light having a wavelength of 589.3 nm) of 1.60 to 1.80.

(Polythiol Compound)

In the present disclosure, the term "polythiol compound" refers to a compound having two or more thiol groups in one molecule.
The polythiol compound contained in the composition may be a single compound or a combination of two or more compounds.
Specific examples of the polythiol compound include those described in International Publication No. WO 2016/125736.
The polythiol compound preferably includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiopentane, and tris(mercaptomethylthio)methane;

more preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate) and pentaerythritol tetrakis(2-mercaptoacetate); and
further preferably at least one selected from the group consisting of 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, and pentaerythritol tetrakis(3-mercaptopropionate).

From the viewpoint of the refractive index of the resulting cured product, the polythiol compound preferably has a refractive index at 20°C with respect to the sodium D-line (i.e., light having a wavelength of 589.3 nm) of 1.60 to 1.80.

(Other Components)

The polymerizable composition may include, in addition to the polymerizable components and the reactive UVA, other components.

Examples of the other components include polymerization catalysts, internal release agents, resin modifiers, base generators, chain extenders, crosslinking agents, radical scavengers, light stabilizers, antioxidants, oil-soluble dyes, fillers, adhesion promoters, antibacterial agents, antistatic agents, dyes, fluorescent whitening agents, fluorescent pigments, and inorganic pigments.

Specific examples of the polymerization catalyst include tertiary amine compounds, inorganic acid salts or organic acid salts of tertiary amine compounds, metal compounds, quaternary ammonium salts, and organic sulfonic acids.

Specific examples of the internal release agent include acidic phosphate esters. Examples of the acidic phosphate ester include phosphate monoesters and phosphate diesters, which may be used individually or in combination of two or more.

Specific examples of the resin modifier include alcohol compounds, amine compounds, epoxy compounds, organic acids or acid anhydrides thereof, (meth)acrylate compounds, and olefin compounds.

When the polymerizable composition includes components other than the polymerizable components and the reactive UVA, the total content thereof may be, relative to the total mass of the polymerizable composition, from 0.1 ppm by mass to 70% by mass, from 1 ppm by mass to 30% by mass, from 10 ppm by mass to 10% by mass, or from 0.1% by mass to 5% by mass.

(Cured Product)

An embodiment of the present disclosure is a cured product of the above-described polymerizable composition.

In the cured product of the present disclosure, the molecule functioning as a UVA is in a state of being bound to the polymer structure formed by the polymerization reaction of the polymerizable components. Accordingly, the release of the component functioning as a UVA to the outside is suppressed. Furthermore, since the cured product of the present disclosure includes a polymer structure formed by the polymerization reaction between at least one selected from the polyiso(thio)cyanate compounds and polyepisulfide compounds, and the polythiol compound, as the polymerizable components, the cured product exhibits a high refractive index and excellent transparency.

The cured product of the present disclosure can be obtained, for example, by heating the polymerizable composition at a temperature at which the polymerization reaction of the polymerizable components occurs.

When the cured product of the present disclosure is photo-curable, the cured product can be obtained by applying the polymerizable composition with light having a wavelength at which the polymerization reaction of the polymerizable components occurs. It is possible to perform heating and light application in combination.

(Optical Material and Spectacle Lens)

An embodiment of the present disclosure is an optical material that includes the above-described cured product.

Examples of the optical material include optical adhesives, coatings, optical waveguides, films, lenses, antireflection films, microlenses, microlens arrays, wafer-level lenses, imaging lenses for cameras (such as in-vehicle cameras, digital cameras, PC cameras, mobile-phone cameras, and surveillance cameras), spectacle lenses, light-beam focusing lenses, light-diffusing lenses, and flash lenses for cameras.

An embodiment of the present disclosure is an spectacle lens that includes the above-described optical material.

(Compound)

An embodiment of the present disclosure is a compound that is a reaction product of the compound represented by the following general formula (1) and a polythiol compound.

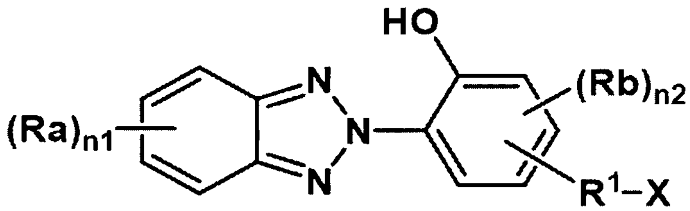

(1)

In the general formula (1), Ra represents a monovalent hydrocarbon group or a halogen atom; n1 represents a number from 0 to 4; Rb represents a monovalent group that does not contain an ethylenically unsaturated double bond; n2 represents a number from 0 to 3; $R^1$ represents a divalent hydrocarbon group; and X represents a functional group that contains an ethylenically unsaturated double bond.

An embodiment of the present disclosure is a compound having a structure represented by the following general formula (2) and a thiol group.

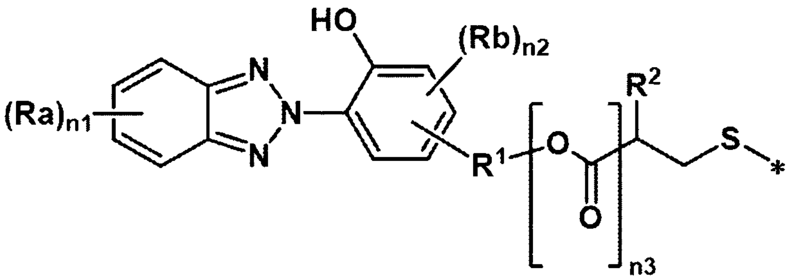

(2)

In the general formula (2), Ra represents a monovalent hydrocarbon group or a halogen atom; n1 represents a number from 0 to 4; Rb represents a monovalent group that does not contain an ethylenically unsaturated double bond; n2 represents a number from 0 to 3; $R^1$ represents a divalent hydrocarbon group; $R^2$ represents a hydrogen atom or a monovalent hydrocarbon group; n3 is 0 or 1; and * indicates a binding site.

The compound of the present disclosure is suitably used for the production of a resin obtained by curing a polymerizable component, or an article containing the resin. Details and preferred embodiments of the compound of the present disclosure may be referred to in the details and preferred embodiments of the reactive UVA contained in the above-described polymerizable composition.

(Method for Producing Polymerizable Composition)

An embodiment of the present disclosure is a method for producing a polymerizable composition, the method including:

preparing a mixture that includes the compound of the present disclosure and a polythiol compound; and
mixing the mixture with at least one selected from a polyiso(thio)cyanate compound or a polyepisulfide compound.

According to the foregoing method, a cured product in which the release of the UVA is suppressed can be produced. Details and preferred embodiments of each compound used in the method of the present disclosure are the same as those described above for each compound.

In the foregoing method, the method for preparing a mixture that includes the compound of the present disclosure (i.e., a reaction product of the compound represented by the general formula and a polythiol compound) and a polythiol compound is not particularly limited.

For example, the mixture may be obtained by mixing the compound represented by the general formula (1) with an excessive amount of polythiol compound with respect to the compound represented by the general formula (1), such that the X in the general formula (1) reacts with a thiol group, thereby obtaining a mixture in which part of the polythiol compound is reacted with the compound represented by the general formula (1).

In the foregoing method, the method for mixing the mixture, which includes the compound of the present disclosure and a polythiol compound, with at least one selected from a polyiso(thio)cyanate compound and a polyepisulfide compound is not particularly limited. It is also possible to further add a polythiol compound at this process.

(Resin)

An embodiment of the present disclosure is a resin having a structure represented by the following general formula (2).

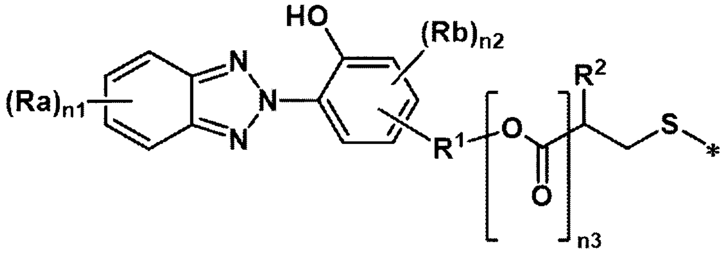

(2)

In the general formula (2), Ra represents a monovalent hydrocarbon group or a halogen atom; n1 is a number of 0 to 4; Rb represents a monovalent group that does not contain an ethylenically unsaturated double bond; n2 is a number of 0 to 3; $R^1$ represents a divalent hydrocarbon group; $R^2$ represents a hydrogen atom or a monovalent hydrocarbon group; n3 is 0 or 1; and * represents a bonding position.

The resin of the present disclosure is in a state in which a molecule functioning as a UVA is bound to a polymer structure. Accordingly, the release of the UVA is suppressed compared with a case in which the molecule functioning as a UVA is not bound to the polymer structure.

The type of the resin of the present disclosure is not particularly limited.

From the viewpoint of obtaining a high refractive index, it is preferable that the resin of the present disclosure includes at least one selected from a thiourethane structure and a sulfide structure.

[Examples]

Hereinafter, the present disclosure will be described in detail with reference to Examples. It should be noted that the present disclosure is not limited in any way by the descriptions of these Examples. Unless otherwise specified, the term "parts" refers to parts by mass. Unless otherwise specified, the "room temperature" refers to 25°C.

<Preparation of Polythiol Composition (A)>

Into a reactor were charged 124.6 parts by mass of 2-mercaptoethanol and 18.3 parts by mass of degassed water. At 12°C to 35°C, 101.5 parts by mass of a 32% by mass aqueous sodium hydroxide solution was added to the reactor in a dropwise manner over 40 minutes. Subsequently, 73.6 parts by mass of epichlorohydrin was added to the reactor in a dropwise manner at 29°C to 36°C over 4.5 hours, followed by stirring for 40 minutes. Formation of 1,3-bis(2-hydroxyethylthio)-2-propanol was confirmed based on the NMR data.

Next, 331.5 parts by mass of 35.5% hydrochloric acid was added, followed by the addition of 183.8 parts by mass of thiourea having a purity of 99.90%. The mixture was stirred under reflux at 110°C for 3 hours to cause a thiuronium chloride reaction. After cooling the mixture to 45°C, 320.5 parts by mass of toluene was added thereto, and the mixture was cooled to 31°C.

Next, 243.1 parts by mass of a 25% aqueous ammonia solution was added at 31°C to 41°C over 44 minutes, and a hydrolysis reaction was caused by stirring at 54°C to 62°C for 3 hours, thereby obtaining a toluene solution of polythiol including 4-mercaptomethyl-1,8-dimercapto-3,6-dithiaoctane as a main component. To this toluene solution, 162.8 parts by mass of 35.5% hydrochloric acid was added, and the toluene solution was subjected to acid washing at 35°C to 43°C for 1 hour. Further, 174.1 parts by mass of degassed water was added, and washing was performed twice at 35°C to 45°C for 30 minutes each. Then, 162.1 parts by mass of 0.1% aqueous ammonia solution was added, and washing was performed for 30 minutes. Then, 174.2 parts by mass of degassed water was added again, and washing was performed twice at 35°C to 45°C for 30 minutes each. After removing toluene and trace amounts of water under heated reduced pressure, the remainder was filtered under reduced pressure through a 1.2-μm PTFE membrane filter, thereby obtaining 205.0 parts by mass of a polythiol composition (A) containing, as a main component, 4-mercaptomethyl-1,8-dimercapto-3,6-dithiaoctane as the polythiol compound.

<Preparation of Polythiol Composition (B)>

Into a reactor were charged 51.2 parts by mass of 2-mercaptoethanol, 26.5 parts by mass of degassed water, and 0.16 parts by mass of a 49% by mass aqueous sodium hydroxide solution. Then, 61.99 parts by mass of epichlorohydrin

was added to the reactor in a dropwise manner at 9°C to 11°C over 6.5 hours, followed by stirring for 60 minutes. Formation of 1-chloro-3-(2-hydroxyethylthio)-2-propanol was confirmed based on the NMR data.

Next, 150.0 parts by mass of a 17.3% aqueous sodium sulfide solution was added to the reactor in a dropwise manner at 7°C to 37°C over 5.5 hours, followed by stirring for 120 minutes. Formation of 1,5,9,13-tetrahydroxy-3,7,11-trithiatridecane was confirmed based on the NMR data.

Into the reactor was charged 279.0 parts by mass of 35.5% hydrochloric acid, followed by charging 125.8 parts by mass of thiourea having a purity of 99.90%. The mixture was stirred under reflux at 110°C for 3 hours to cause a thiuronium chloride reaction. After cooling the mixture to 45°C, 214.0 parts by mass of toluene was added thereto, and the mixture was cooled to 26°C.

To the mixture, 206.2 parts by mass of a 25% by mass aqueous ammonia solution was added over 30 minutes at 26-50°C, and a hydrolysis reaction was caused by stirring at 50-65°C for 1 hour, thereby obtaining a toluene solution of polythiol including, as main components, 4,8-dimercaptomethyl-1,11-dimercapto-3,6,9-trithioundecane, 4,7-dimercaptomethyl-1,11-dimercapto-3,6,9-trithioundecane, and 5,7-dimercaptomethyl-1,11-dimercapto-3,6,9-trithioundecane.

To the toluene solution, 59.4 parts by mass of 36% hydrochloric acid was added, and acid washing of 30 minutes was carried out twice at 34-39°C. Then, 118.7 parts by mass of degassed water was added, and washing of 30 minutes was carried out five times at 35-45°C. After removing toluene and trace amounts of water under heated reduced pressure, the remainder was filtered under reduced pressure through a 1.2-μm PTFE membrane filter, thereby obtaining 115.9 parts by mass of a polythiol composition (B) containing, as main components, 4,8-dimercaptomethyl-1,11-dimercapto-3,6,9-trithioundecane, 4,7-dimercaptomethyl-1,11-dimercapto-3,6,9-trithioundecane, and 5,7-dimercaptomethyl-1,11-dimercapto-3,6,9-trithioundecane.

<Preparation of Polythiol Composition (C)>

Into a four-neck reaction flask equipped with a stirrer, a Dean-Stark trap, a nitrogen purge tube, and a thermometer were charged 136.9 parts by mass of pentaerythritol with a purity of 99.5%, 406.3 parts by mass of 3-mercaptopropionic acid, 3.8 parts by mass of p-toluenesulfonic acid monohydrate, and 185.2 parts by mass of toluene. The molar ratio of 3-mercaptopropionic acid to pentaerythritol was 3.80. Reflux of the mixture began 120 minutes after heating was initiated with an oil bath (temperature of oil bath: 113°C) when the internal temperature reached 97°C.

After the start of reflux, the mixture was caused to react for 7 hours (internal temperature: 97°C to 121°C). During the reaction, the water generated under reflux as a by-product was continuously removed from the system. The amount of water removed from the system corresponded to 93.2% of the theoretical amount of water formed.

After cooling, the reaction solution was subjected to alkaline washing, followed by water washing, and toluene and trace amounts of water were removed under heated reduced pressure. The remainder was filtered through a PTFE-type membrane filter, thereby obtaining 462.3 parts by mass of a polythiol composition (C) containing pentaerythritol 3-mercaptopropionate ester as a main component.

<Example 1>

Into a reactor at 25°C were charged 3.0 parts by mass of 2-(2H-benzotriazol-2-yl)-4-methyl-6-(2-propenyl)phenol (manufactured by Tokyo Chemical Industry Co., Ltd.; structure shown below) as a UV absorber, 160.0 parts by mass of toluene, and 96.0 parts by mass of the polythiol composition (A). Under a nitrogen atmosphere, 0.55 parts by mass of 2,2'-azobisisobutyronitrile (AIBN, manufactured by FUJIFILM Wako Pure Chemical Corporation) as a radical reaction initiator was added at 25°C, and the mixture was stirred. The temperature was raised from 25°C to 80°C, and the reaction was caused at 80°C for 6 hours. Disappearance of 2-(2H-benzotriazol-2-yl)-4-methyl-6-(2-propenyl)phenol was confirmed by the HPLC analysis.

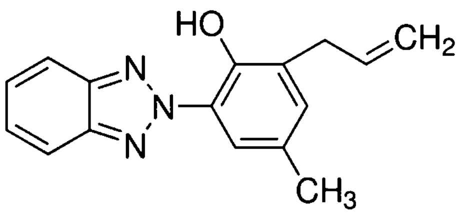

After cooling the reaction solution to 25°C, 100 parts by mass of degassed water was added thereto, and washing was performed by stirring for 15 minutes. Thereafter, the aqueous layer was removed by phase separation. To the obtained toluene layer, 143.5 parts by mass of a 32% aqueous sodium hydroxide solution was added, and stirred at 40°C. The water-soluble components were separated from the toluene layer by adding 100 parts by mass of water for extraction. The

resulting aqueous extract was washed twice with 50 parts by mass of toluene at 40°C. Subsequently, 200 parts by mass of toluene was added, followed by addition of 150 parts by mass of 35% hydrochloric acid, and the mixture was stirred at 40°C. The aqueous layer was separated by phase separation to obtain a toluene extract. The toluene extract was washed three times with 80 parts by mass of water at 40°C, thereby obtaining a toluene solution of the polythiol composition.

From the obtained toluene solution, toluene was removed with a rotary evaporator. The resulting mixture was subjected to removal of low-boiling components using a vacuum pump, and then subjected to filtration through a 3-micron PTFE membrane filter. As a result, 91.9 parts by mass of a polythiol/UVA composition, in which part of the polythiol compound was reacted with the ultraviolet absorber, was obtained. The content of the UVA in the entire polythiol/UVA composition was 3.3% by mass.

A mixture was obtained by mixing and dissolving 52 parts by mass of m-xylylene diisocyanate as the polyisocyanate compound, 0.015 parts by mass of dibutyltin dichloride as the curing catalyst, and 0.10 parts by mass of an acidic phosphate ester (Zelec UN, Stepan Co.) as the internal release agent at 20°C. The mixture was mixed with 48 parts by mass of the polythiol/UVA composition, thereby obtaining, as a homogeneous liquid, a polymerizable composition for producing a resin molded article.

The resulting polymerizable composition was degassed at 600 Pa for 1 hour and then filtered through a 1-μm Teflon (registered trademark) filter. The polymerizable composition after filtration was poured into a mold composed of a pair of glass plates fixed with tape. The mold was placed in an oven, and the temperature inside the oven was increased from 10°C to 120°C over 38 hours to cure the polymerizable composition. The cured product was removed from the mold and subjected to annealing at 120°C for 2 hours, thereby obtaining a flat plate-shaped resin molded article having a thickness of 3.0 mm.

<Example 2>

Into a reactor at 25°C were charged 0.75 parts by mass of 2-(2H-benzotriazol-2-yl)-4-methyl-6-(2-propenyl) phenol (manufactured by Tokyo Chemical Industry Co., Ltd.) as a ultraviolet absorber, 40.0 parts by mass of toluene, and 24.7 parts by mass of the polythiol composition (B). Under a nitrogen atmosphere, 0.046 parts by mass of 2,2'-azobisisobutyronitrile (AIBN, manufactured by FUJIFILM Wako Pure Chemical Corporation) as a radical initiator was added to the reactor at 25°C, followed by stirring. The mixture was heated from 25°C to 80°C, and caused to react at 80°C for 4 hours. Disappearance of 2-(2H-benzotriazol-2-yl)-4-methyl-6-(2-propenyl)phenol was confirmed by the HPLC analysis.

After cooling the reaction mixture to 25°C, 40 parts by mass of degassed water was added thereto, and washing was performed by stirring for 15 minutes. Thereafter, the aqueous layer was removed by phase separation. To the resulting toluene layer, 34.92 parts by mass of a 32% aqueous sodium hydroxide solution was added, and the mixture was stirred at 40°C. The water-soluble components were separated from the toluene layer by adding 30 parts by mass of water for extraction. The resulting aqueous extract was washed twice with 20 parts by mass of toluene at 40°C. Subsequently, 100 parts by mass of toluene was added, followed by addition of 40 parts by mass of 35% hydrochloric acid, and the mixture was stirred at 40°C. The aqueous layer was separated by phase separation to obtain a toluene extract. The toluene extract was washed three times with 40 parts by mass of water at 40°C, thereby obtaining a toluene solution of the polythiol composition.

From the obtained toluene solution, toluene was removed with a rotary evaporator. The resulting mixture was subjected to removal of low-boiling components using a vacuum pump, and then subjected to filtration through a 3-micron PTFE membrane filter. As a result, 20.6 parts by mass of a polythiol/UVA composition, in which part of the polythiol compound was reacted with the ultraviolet absorber, was obtained. The content of the UVA in the entire polythiol/UVA composition was 3.6% by mass.

A polymerizable composition was prepared in the same manner as in Example 1, except that the amount of m-xylylene diisocyanate was changed to 51 parts by mass and the amount of the polythiol/UVA composition was changed to 49 parts by mass. A resin molded article was obtained from the polymerization composition.

<Example 3>

Into a reactor at 25°C were charged 1.50 parts by mass of 2-(2H-benzotriazol-2-yl)-4-methyl-6-(2-propenyl) phenol (manufactured by Tokyo Chemical Industry Co., Ltd.; ultraviolet absorber), 40.0 parts by mass of toluene, and 23.9 parts by mass of the polythiol composition (C). Under a nitrogen atmosphere, 0.092 parts by mass of 2,2'-azobisisobutyronitrile (AIBN, manufactured by FUJIFILM Wako Pure Chemical Corporation) as a radical reaction initiator was added to the reactor at 25°C, and the mixture was stirred. The temperature was raised from 25°C to 80°C, and the reaction was caused at 80°C for 3 hours. Disappearance of 2-(2H-benzotriazol-2-yl)-4-methyl-6-(2-propenyl)phenol was confirmed by the HPLC analysis.

After cooling the reaction solution to 25°C, 40 parts by mass of degassed water was added thereto, and washing

was performed by stirring for 15 minutes. Thereafter, the aqueous layer was removed by phase separation. To the resulting toluene layer, 40 parts by mass of water was added, and the pH was adjusted to around 7 by dropping a small amount of 1% aqueous ammonia while stirring. Subsequently, a toluene extract was obtained by separating the aqueous layer by phase separation. The toluene extract was washed three times at 40°C with 40 parts by mass of water, thereby obtaining a toluene solution of the polythiol composition.

From the obtained toluene solution, toluene was removed with a rotary evaporator. The resulting mixture was subjected to removal of low-boiling components using a vacuum pump, and then subjected to filtration through a 3-micron PTFE membrane filter. As a result, 22.8 parts by mass of a polythiol/UVA composition, in which part of the polythiol compound was reacted with the ultraviolet absorber, was obtained. The content of the UVA in the entire polythiol/UVA composition was 6.6% by mass.

A mixture was obtained by mixing and dissolving, at 20°C, 50.6 parts by mass of a polyisocyanate composition mainly composed of 2,5-bis(isocyanatomethyl)bicyclo[2.2.1]heptane and 2,6-bis(isocyanatomethyl)bicyclo[2.2.1]heptane, 0.06 parts by mass of dibutyltin dichloride as a curing catalyst, and 0.10 parts by mass of an acidic phosphate ester (Zelec UN, Stepan Co.) as an internal mold-release agent. The mixture was mixed with 23.9 parts by mass of the polythiol/UVA composition and 25.5 parts by mass of the polythiol composition (A), thereby obtaining, as a homogeneous liquid, a polymerizable composition for producing a resin molded article. A resin molded article was obtained from the obtained polymerizable composition in the same manner as in Example 1.

<Example 4>

Into a reactor at 25°C were charged 0.60 parts by mass of 2-(2H-benzotriazol-2-yl)-4-methyl-6-(2-propenyl) phenol (manufactured by Tokyo Chemical Industry Co., Ltd.) as an ultraviolet absorber, 15.0 parts by mass of toluene, and 5.0 parts by mass of the polythiol composition (B). Under a nitrogen atmosphere, 0.10 parts by mass of 2,2'-azobis(isobutyronitrile) (AIBN, manufactured by FUJIFILM Wako Pure Chemical Corporation) as a radical initiator was added to the reactor at 25°C, and the mixture was stirred. The temperature was raised from 25°C to 80°C, and the reaction was caused at 80°C for 6 hours. Disappearance of 2-(2H-benzotriazol-2-yl)-4-methyl-6-(2-propenyl)phenol was confirmed by the HPLC analysis.

After cooling the reaction mixture to 25°C, 15 parts by mass of degassed water was added thereto, and washing was performed by stirring for 15 minutes. Thereafter, the aqueous layer was removed by phase separation. To the resulting toluene layer, 6.8 parts by mass of a 32% aqueous sodium hydroxide solution was added, and the mixture was stirred at 40°C. The water-soluble components were separated from the toluene layer by adding 25 parts by mass of water for extraction. The resulting aqueous extract was washed twice with 10 parts by mass of toluene at 40°C. Subsequently, 30 parts by mass of toluene was added, followed by addition of 7.0 parts by mass of 35% hydrochloric acid, and the mixture was stirred at 40°C. The aqueous layer was separated by phase separation to obtain a toluene extract. The toluene extract was washed three times with 40 parts by mass of water at 40°C, thereby obtaining a toluene solution of the polythiol composition.

From the obtained toluene solution, toluene was removed with a rotary evaporator. The resulting mixture was subjected to removal of low-boiling components using a vacuum pump, and then subjected to filtration through a 3-micron PTFE membrane filter. As a result, 2.7 parts by mass of a polythiol/UVA composition, in which part of the polythiol compound was reacted with the ultraviolet absorber, was obtained. The content of the UVA in the entire polythiol/UVA composition was 22% by mass.

A mixture was obtained by mixing 10.0 parts by mass of bis(2,3-epithiopropyl) disulfide (a polyepsulfide compound, manufactured by Mitsui Chemicals, Inc.), 0.002 parts by mass of N,N-dimethylcyclohexylamine (manufactured by Tokyo Chemical Industry Co., Ltd.), 0.01 parts by mass of N,N-dicyclohexylmethylamine (manufactured by Tokyo Chemical Industry Co., Ltd.), and 0.99 parts by mass of the polythiol/UVA composition, thereby obtaining, as a homogeneous liquid, a polymerizable composition for producing a resin molded article. The resulting polymerizable composition was deaerated at 600 Pa for 1 hour and then filtered through a 1-μm Teflon (registered trademark) filter. The polymerizable composition after filtration was poured into a mold composed of a pair of glass plates fixed with tape. The mold was placed in an oven, and the temperature inside the oven was increased from 10°C to 120°C over 20 hours to cure the polymerizable composition. After removing the cured product from the mold, annealing was performed at 120°C for 2 hours, thereby obtaining a flat plate-shaped resin molded article having a thickness of 3.0 mm.

<Example 5>

Into a reactor at 25°C were charged 0.63 parts by mass of 2-[2-hydroxy-5-[2-(methacryloyloxy)ethyl]phenyl]-2H-benzotriazole (manufactured by Tokyo Chemical Industry Co., Ltd.; structure shown below) as an ultraviolet absorber, 30.0 parts by mass of toluene, 20.0 parts by mass of the polythiol composition (A), and 0.043 parts by mass of 1,4-diazabicyclo[2.2.2]octane (manufactured by FUJIFILM Wako Pure Chemical Corporation) as a reaction initiator. The

mixture was stirred under a nitrogen atmosphere. The temperature was raised from 25°C to 70°C, and the reaction was caused at 70°C for 5 hours. Disappearance of 2-[2-hydroxy-5-[2-(methacryloyloxy)ethyl]phenyl]-2H-benzotriazole was confirmed by the HPLC analysis.

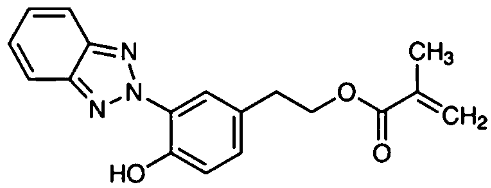

After cooling the reaction mixture to 25°C, 30 parts by mass of 1% hydrochloric acid was added, and washing was performed by stirring for 15 minutes. Thereafter, the aqueous layer was removed by phase separation. The resulting toluene layer was washed twice with 30 parts by mass of water at 25°C, thereby obtaining a toluene solution of the polythiol composition.

From the obtained toluene solution, toluene was removed using a rotary evaporator. The resulting mixture was subjected to removal of low-boiling components with a vacuum pump, and then subjected to filtration through a 3-micron PTFE membrane filter, thereby obtaining 20.4 parts by mass of a polythiol/UVA composition, in which part of the polythiol compound was reacted with the ultraviolet absorber. The content of the UVA in the entire polythiol/UVA composition was 3.1% by mass.

A polymerizable composition was prepared in the same manner as in Example 1, except that 48 parts by mass of the polythiol/UVA composition was used. A resin molded article was obtained from the polymerization composition.

<Example 6>

Into a reactor at 25°C were charged 0.67 parts by mass of 2-[2-hydroxy-5-[2-(methacryloyloxy)ethyl]phenyl]-2H-benzotriazole (manufactured by Tokyo Chemical Industry Co., Ltd.) as an ultraviolet absorber, 30.0 parts by mass of toluene, 5.0 parts by mass of the polythiol composition (B), and 0.046 parts by mass of 1,4-diazabicyclo[2.2.2]octane (manufactured by FUJIFILM Wako Pure Chemical Corporation) as a reaction initiator, and the mixture was stirred under a nitrogen atmosphere. The temperature was raised from 25°C to 70°C, and the reaction was caused at 70°C for 5 hours. Disappearance of 2-[2-hydroxy-5-[2-(methacryloyloxy)ethyl]phenyl]-2H-benzotriazole was confirmed by the HPLC analysis.

After cooling the reaction mixture to 25°C, 10 parts by mass of a 1% hydrochloric acid solution was added thereto, and washing was performed by stirring for 15 minutes. Thereafter, the aqueous layer was removed by phase separation. The resulting toluene layer was washed twice with 10 parts by mass of water at 25°C, thereby obtaining a toluene solution of the polythiol composition.

From the obtained toluene solution, toluene was removed using a rotary evaporator. The resulting mixture was subjected to removal of low-boiling components with a vacuum pump, and then subjected to filtration through a 3-micron PTFE membrane filter, thereby obtaining 3.4 parts by mass of a polythiol/UVA composition in which part of the polythiol compound was reacted with the ultraviolet absorber. The content of the UVA in the entire polythiol/UVA composition was 19.7% by mass.

A polymerizable composition was prepared in the same manner as in Example 4, except that 0.99 parts by mass of the polythiol/UVA composition was used. A resin molded article was obtained from the polymerization composition.

<Comparative Example 1>

A mixture was obtained by mixing and dissolving, at 20°C, 52 parts by mass of m-xylylene diisocyanate as a polyisocyanate compound, 0.015 parts by mass of dibutyltin dichloride as a curing catalyst, 0.10 parts by mass of an acidic phosphate ester (Zelec UN, Stepan Co.) as an internal release agent, and 1.5 parts by mass of an ultraviolet absorber having the structure shown below (Viosorb 583, manufactured by Kyodo Chemical Co., Ltd.). To this mixture, 48 parts by mass of the polythiol composition (A) was added and mixed, thereby obtaining, as a homogeneous liquid, a polymerizable composition. A resin molded article was produced using the obtained polymerizable composition in the same manner as in Example 1.

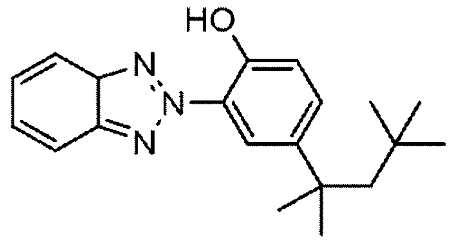

<Comparative Example 2>

A mixture was obtained by mixing and dissolving, at 20°C, 51 parts by mass of m-xylylene diisocyanate as a polyisocyanate compound, 0.015 parts by mass of dibutyltin dichloride as a curing catalyst, 0.10 parts by mass of an acidic phosphate ester (Zelec UN, Stepan Co.) as an internal release agent, and 1.5 parts by mass of Viosorb 583 (Kyodo Chemical Co., Ltd.) as an ultraviolet absorber. To this mixture, 49 parts by mass of the polythiol composition (B) was added and mixed, thereby obtaining, as a homogeneous liquid, a polymerizable composition. A resin molded article was produced using the obtained polymerizable composition in the same manner as in Example 1.

<Comparative Example 3>

A mixture was obtained by mixing and dissolving, at 20°C, 50.6 parts by mass of a polyisocyanate composition mainly composed of 2,5-bis(isocyanatomethyl)bicyclo[2.2.1]heptane and 2,6-bis(isocyanatomethyl)bicyclo[2.2.1]heptane, 0.06 parts by mass of dibutyltin dichloride as a curing catalyst, 0.10 parts by mass of an acidic phosphate ester (Zelec UN, Stepan Co.) as an internal release agent, and 1.5 parts by mass of Viosorb 583 (manufactured by Kyodo Chemical Co., Ltd.) as an ultraviolet absorber. To this mixture were added 23.9 parts by mass of the polythiol composition (C) and 25.5 parts by mass of the polythiol composition (A), thereby obtaining, as a homogeneous liquid, a polymerizable composition. A resin molded article was produced using the obtained polymerizable composition in the same manner as in Example 1.

<Comparative Example 4>

A polymerizable composition for producing a resin molded article was obtained, as a homogeneous liquid, by mixing 10.0 parts by mass of bis(2,3-epithiopropyl) disulfide (manufactured by Mitsui Chemicals, Inc.) as a polyepsulfide compound, 0.002 parts by mass of N,N-dimethylcyclohexylamine (manufactured by Tokyo Chemical Industry Co., Ltd.), 0.01 parts by mass of N,N-dicyclohexylmethylamine (manufactured by Tokyo Chemical Industry Co., Ltd.), 0.99 parts by mass of the polythiol composition (B), and 0.11 parts by mass of the compound having the structure shown below (Tinuvin PS, manufactured by BASF Japan Ltd.) as an ultraviolet absorber.

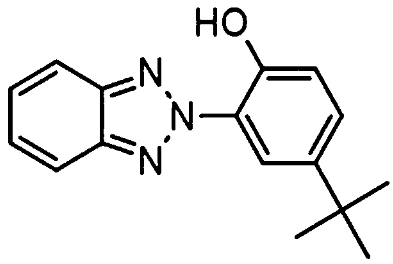

The resulting polymerizable composition was deaerated at 600 Pa for 1 hour and then filtered through a 1-μm Teflon (registered trademark) filter. The polymerizable composition after filtration was poured into a mold composed of a pair of glass plates fixed with tape. The mold was placed in an oven, and the temperature inside the oven was increased from 10°C to 120°C over 20 hours to cure the polymerizable composition. After removing the cured product from the mold, annealing was performed at 120°C for 2 hours, thereby obtaining a flat plate-shaped resin molded article having a thickness of 3.0 mm.

<Evaluation of Ultraviolet Absorption Performance of Resin Molded Articles>

The resin molded articles produced in the Examples and Comparative Examples were subjected to the measurement of ultraviolet-visible absorption spectra, ranging from 300 nm to 800 nm, using a UV-vis spectrophotometer

(UV-1800, manufactured by Shimadzu Corporation). The transmittances (%) at 380 nm and 400 nm are shown in Table 1.

<Evaluation of Elution of Ultraviolet Absorber>

The elution properties of the ultraviolet absorber from the resin molded articles produced in the Examples and Comparative Examples were evaluated by conducting the following test.

The resin molded articles were finely pulverized by freeze grinding to obtain resin powder. Using 5 g of the obtained resin powder, ultrasonic extraction was performed twice (10 minutes each) at 25°C with 35 mL of dichloromethane. Dichloromethane was removed from the resulting extract using a rotary evaporator. The amount of the concentrate obtained after removing the solvent was defined as the amount of eluted component X (mg). The elution recovery (wt%) was calculated based on the theoretical amount of UVA Y (mg) contained in 5 g of the resin powder and the amount of eluted component X (mg) according to the following formula. The results are shown in Table 1.

$$\text{Elution recovery (wt\%)} = (X / Y) \times 100$$

The ultraviolet-visible absorption spectra were measured by dissolving 100 mg of the eluted components obtained by the above method in 10 mL of chloroform. When the transmittance at 370 nm was 90% or higher, it was determined that the eluted component did not contain a sufficient amount of a component having absorbance at this wavelength, and that the content of benzotriazole skeleton in the eluted component was sufficiently low (1% or less). The results are shown in Table 1.

For the calibration, an ultraviolet absorber (Viosorb-583) in the amounts shown in the following (1) to (3) was dissolved in 10 mL of chloroform, and the ultraviolet-visible absorption spectra were measured. The results are as follows:

(1) Transmittance (T%) at 5.0 mg (approx. 500 ppm equivalent) = 0.03%
(2) Transmittance (T%) at 0.5 mg (approx. 50 ppm equivalent) = 20.5%
(3) Transmittance (T%) at 0.05 mg (approx. 5 ppm equivalent) = 91.2%

Table 1

| | | Examp les | | | | | | Comparative Examples | | | |
|---|---|---|---|---|---|---|---|---|---|---|---|
| | | 1 | 2 | 3 | 4 | 5 | 6 | 1 | 2 | 3 | 4 |
| Amont of UVA relative to 100 parts by mass of polymerizable components (parts by mass) | | 1.6 | 1.8 | 1.6 | 2.0 | 1.5 | 1.8 | 1.5 | 1.5 | 1.5 | 1.0 |
| UV Absorption Properties | 380nm Transmittance (%) | 0.01 | 0.00 | 0.02 | 0.10 | 0.01 | 0.10 | 0.01 | 0.01 | 0.03 | 0.00 |
| | 400nm Transmittance (%) | 0.02 | 1.10 | 0.02 | 0.01 | 0.14 | 0.60 | 0.02 | 0.72 | 0.00 | 3.43 |

(continued)

| | | Examp les | | | | | | Comparative Examples | | | |
|---|---|---|---|---|---|---|---|---|---|---|---|
| | | 1 | 2 | 3 | 4 | 5 | 6 | 1 | 2 | 3 | 4 |
| Elution Properties | Amount used in elution test (g) | 5.0 | 5.0 | 5.0 | 5.0 | 5.0 | 5.0 | 5.0 | 5.0 | 5.0 | 5.0 |
| | Amount of eluted component (mg) | 1.4 | 0.9 | 13.7 | 9.1 | 3.1 | 3.4 | 26.8 | 36.5 | 22.2 | 68 |
| | Theoretical UVA amount in amount used in elution test (mg) | 80 | 89 | 80 | 100 | 75 | 90 | 75 | 75 | 75 | 50 |
| | Elusion recovery (wt%) | 1.8% | 1.0% | 17.1% | 9.1% | 4.1% | 3.8% | 35.7% | 48.7% | 29.6% | 136.0% |
| | Content of benzotriazole skeleton in eluted component | 1% or less | 1% or less | 1% or less | 1% or less | 1% or less | 1% or less | 90% or more | 90% or more | 90% or more | 90% or more |
| Appearance of molded article | | Clear | Clear | Clear | Clear | Clear | Clear | Clear | Clear | Clear | Clear |

As shown in Table 1, all of the resin molded articles obtained in Examples 1 to 6 exhibited low light transmittance in the ultraviolet region, demonstrating sufficient ultraviolet absorption capability.

Furthermore, the resin molded articles obtained in Examples 1 to 6 showed higher transmittance T% at 370 nm (90% or higher) for the eluted components, as compared with those obtained in Comparative Examples 1 to 4, indicating a low content of the benzotriazole skeleton in the eluted components (1% or less). From these results, it was found that the release of the ultraviolet absorber was suppressed in the resin molded articles obtained in Examples 1 to 6. This is considered to be because the ultraviolet absorber in the resin molded articles obtained in Examples 1 to 6 is in a state of being bonded to the polymer structure.

The disclosure of Japanese Patent Application No. 2023-113709 is incorporated herein in its entirety by reference.

All publications, patent applications, and technical standards cited herein are incorporated in their entirety by reference, to the same extent as if each individual publication, patent application, and technical standard were specifically and individually indicated to be incorporated by reference.

## Claims

**1.** A polymerizable composition, comprising:

at least one selected from a polyiso(thio)cyanate compound or a polyepisulfide compound;
a polythiol compound; and
a reaction product of a compound represented by the following general formula (1) with a polythiol compound:

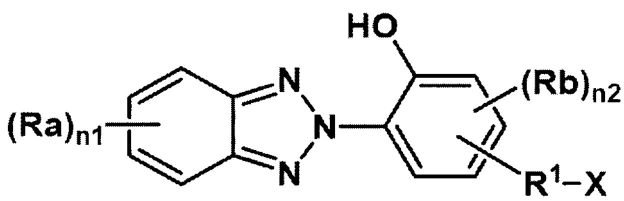

(1)

wherein, in the general formula (1), Ra represents a monovalent hydrocarbon group or a halogen atom; n1 is a

number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.

**2.** The polymerizable composition according to claim 1, wherein the polyiso(thio)cyanate compound includes at least one selected from the group consisting of pentamethylene diisocyanate, hexamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, tolylene diisocyanate, 4,4'-diphenylmethane diisocyanate, and phenylene diisocyanate.

**3.** The polymerizable composition according to claim 1, wherein the polythiol compound includes at least one selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(3-mercaptopropionate), pentaerythritol tetrakis(2-mercaptoacetate), 2,5-bis(mercaptomethyl)-1,4-dithiane, bis(2-mercaptoethyl) sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithietane, 1,1,2,2-tetrakis(mercaptomethylthio)ethane, 3-mercaptomethyl-1,5-dimercapto-2,4-dithiapentane, and tris(mercaptomethylthio)methane.

**4.** A cured product of the polymerizable composition according to claim 1.

**5.** An optical material, comprising the cured product according to claim 4.

**6.** A spectacle lens, comprising the optical material according to claim 5.

**7.** A compound, comprising a reaction product of a compound represented by the following general formula (1) and a polythiol compound:

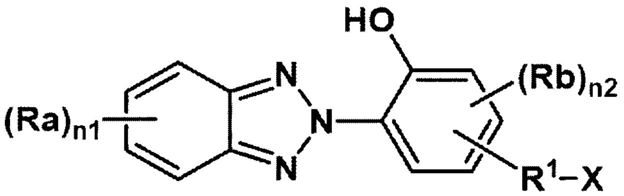

(1)

wherein, in the general formula (1), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; and X represents a functional group containing an ethylenically unsaturated double bond.

**8.** A compound having a structure represented by the following general formula (2) and a thiol group:

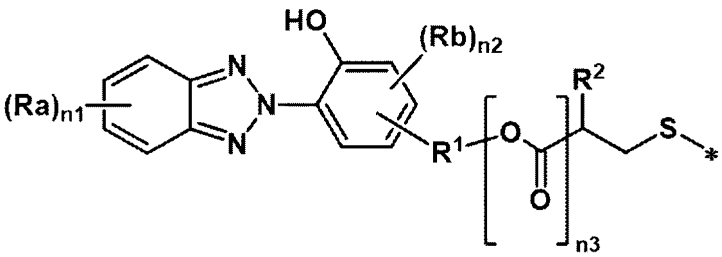

(2)

wherein, in the general formula (2), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; $R^2$ represents a hydrogen atom or a monovalent hydrocarbon group; n3 is 0 or 1; and * represents a bonding position.

**9.** A method for producing a polymerizable composition, the method comprising:

preparing a mixture that includes the compound according to claim 7 or claim 8 and a polythiol compound; and mixing the mixture with at least one selected from a polyiso(thio)cyanate compound or a polyepisulfide compound.

**10.** A resin having a structure represented by the following general formula (2):

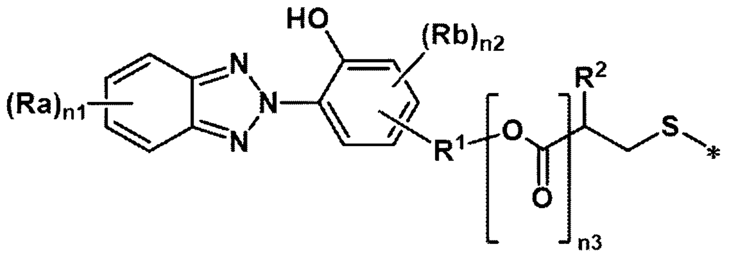

(2)

wherein, in the general formula (2), Ra represents a monovalent hydrocarbon group or a halogen atom; n1 is a number from 0 to 4; Rb represents a monovalent group that does not contain an ethylenically unsaturated double bond; n2 is a number from 0 to 3; $R^1$ represents a divalent hydrocarbon group; $R^2$ represents a hydrogen atom or a monovalent hydrocarbon group; n3 is 0 or 1; and * represents a bonding position.

## INTERNATIONAL SEARCH REPORT

International application No.
**PCT/JP2024/024855**

### A. CLASSIFICATION OF SUBJECT MATTER

***C08G 18/38***(2006.01)i; ***C08G 75/06***(2006.01)i; ***G02B 1/04***(2006.01)i; ***G02C 7/00***(2006.01)i
FI: C08G18/38 076; C08G75/06; G02B1/04; G02C7/00

According to International Patent Classification (IPC) or to both national classification and IPC

### B. FIELDS SEARCHED

Minimum documentation searched (classification system followed by classification symbols)

C08G18/38; C08G75/06; G02B1/04; G02C7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-207086 A (RIKEN VINYL INDUSTRY CO., LTD.) 31 July 2001 (2001-07-31) claims 1, 2, 4, paragraphs [0002], [0006]-[0008], example 2 | 1-4, 7-10<br>1-10 |
| X<br>A | JP 2005-279992 A (KONICA MINOLTA MEDICAL & GRAPHIC, INC.) 13 October 2005 (2005-10-13) claims 4, 8, paragraphs [0030], [0074], table 6 | 7, 8, 10<br>1-6, 9 |
| Y | WO 2023/120606 A1 (MITSUI CHEMICALS, INC.) 29 June 2023 (2023-06-29) claims 1, 10, 15, paragraphs [0089], [0177], [0183], example 1 | 1-10 |
| Y | WO 2011/074622 A1 (TORAY OPELONTEX CO., LTD.) 23 June 2011 (2011-06-23) claim 1, paragraphs [0007], [0031], [0054], example 1 | 1-10 |
| A | JP 2009-270076 A (SHIPRO KASEI KAISHA LTD.) 19 November 2009 (2009-11-19) | 1-10 |
| A | US 7825257 B1 (BAUSCH & LOMB INCORPORATED) 02 November 2010 (2010-11-02) | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 August 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/024855**

**C. DOCUMENTS CONSIDERED TO BE RELEVANT**

| Category* | Citation of document, with indication, where appropriate, of the relevant passages | Relevant to claim No. |
|---|---|---|
| A | JP 60-38411 A (IOLAB CORPORATION) 28 February 1985 (1985-02-28) | 1-10 |
| A | WO 2014/136486 A1 (FUJIFILM CORPORATION) 12 September 2014 (2014-09-12) | 1-10 |

Form PCT/ISA/210 (second sheet) (July 2022)

**INTERNATIONAL SEARCH REPORT**
**Information on patent family members**

International application No.
**PCT/JP2024/024855**

| Patent document cited in search report | Publication date (day/month/year) | Patent family member(s) | Publication date (day/month/year) |
|---|---|---|---|
| JP 2001-207086 A | 31 July 2001 | (Family: none) | |
| JP 2005-279992 A | 13 October 2005 | (Family: none) | |
| WO 2023/120606 A1 | 29 June 2023 | KR 10-2024-0056733 A<br>CN 118159876 A | |
| WO 2011/074622 A1 | 23 June 2011 | US 2012/0296016 A1<br>claim 1, paragraphs [0010], [0052], [0070], example 1<br>EP 2514860 A1<br>CN 102762783 A<br>KR 10-2012-0099769 A<br>TW 201136969 A | |
| JP 2009-270076 A | 19 November 2009 | (Family: none) | |
| US 7825257 B1 | 02 November 2010 | (Family: none) | |
| JP 60-38411 A | 28 February 1985 | US 4611061 A<br>EP 131468 A2<br>KR 10-1985-0001792 A | |
| WO 2014/136486 A1 | 12 September 2014 | US 2015/0380042 A1<br>CN 105027205 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019015922 A
- WO 2011055540 A
- WO 2016125736 A
- JP 2023113709 A